# EUROPEAN PATENT SPECIFICATION

(11) **EP 3 708 306 B1**
(45) Date of publication and mention of the grant of the patent: **09.03.2022**
(21) Application number: 18876829.5
(22) Date of filing: 08.11.2018
(51) Int. Cl.: B25J 9/00

(54) **FEW-JOINT OVER-CONSTRAINED FIVE-FREEDOM-DEGREE HYBRID CONNECTION ROBOT**
ROBOTER MIT ÜBERBEANSPRUCHTER HYBRIDVERBINDUNG MIT FÜNF FREIHEITSGRADEN UND EINIGEN GELENKEN
ROBOT DE CONNEXION HYBRIDE À CINQ DEGRÉS DE LIBERTÉ SURCONTRAINT À PEU DE JOINTS

(30) Priority: 10.11.2017 CN 201711104139
(43) Date of publication of application: 16.09.2020
(73) Proprietor: Yanshan University, Hebei 066004 (CN); Shanghai Aerospace Equipments Manufacturer Co., Ltd., Shanghai 200245 (CN)
(72) Inventor: ZHAO, Yongsheng, Qinhuangdao Hebei 066004 (CN); MENG, Guang, Qinhuangdao Hebei 066004 (CN); ZHANG, Dongsheng, Qinhuangdao Hebei 066004 (CN); XU, Yundou, Qinhuangdao Hebei 066004 (CN); GUO, Lijie, Qinhuangdao Hebei 066004 (CN); YUE, Yi, Qinhuangdao Hebei 066004 (CN); ZHOU, Yulin, Qinhuangdao Hebei 066004 (CN); YAO, Jiantao, Qinhuangdao Hebei 066004 (CN); LIU, Mingfang, Qinhuangdao Hebei 066004 (CN); YANG, Fan, Qinhuangdao Hebei 066004 (CN)
(74) Representative: Zaboliene, Reda
(86) International application number: PCT/CN2018/114570
(87) International publication number: WO 2019/091425

(56) References cited:
- WO-A1-2011/159225
- CN-A- 102 699 898
- CN-A- 103 252 683
- CN-A- 103 252 683
- CN-A- 107 671 845
- DE-A1- 19 920 940
- US-A- 4 790 718
- US-A1- 2017 113 356
- XU YUNDOU ET AL: "A Five-Degree-of-Freedom Hybrid Manipulator for Machining of Complex Curved Surface", 6 August 2017 (2017-08-06), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 48 - 58, XP047453248, ISBN: 978-3-642-17318-9 [retrieved on 2017-08-06] * abstract; figures 1,5-8,11 *

## Description

### TECHNICAL FIELD

The present invention belongs to the field of industrial robots, and particularly relates to a hybrid robot.

### BACKGROUND

As an indispensable part of industrial production, robots have been widely used in such industries of automotive industry, automatic production lines and aerospace. The robot technology can be applied to the fields of curved-surface machining, handling, spraying, assembling, etc., and thus has a bright application prospect. A hybrid robot integrates the characteristics of a compact structure and high rigidity of a parallel mechanism, as well as excellent flexibility and large working space of a serial structure, and thus, it has received extensive attention and research, and has become a hot spot in the field of robot research.

A five-degree-of-freedom hybrid robot constructed based on a 2R1T parallel mechanism has high modularity, simple kinematic models and quick dynamic response, and thus, has a bright application prospect. However, the current Tricept five-degree-of-freedom hybrid robot has the disadvantages of high processing and manufacturing cost, high assembly difficulty, etc. due to its complicated structure and massive branches. A (2T1R) & (1T1R) five-degree-of-freedom decoupling hybrid mechanism disclosed by the patent application number CN105563461A has a complicated branch chain configuration and a large number of joints, and as a result, it is difficult to guarantee the overall rigidness of a hybrid robot employing the mechanism. The patent US 2017 113356 A1 also discloses a five-degree-of-freedom hybrid robot.

### SUMMARY

An objective of the present invention is to provide an over-constrained few-joint five-degree-of-freedom hybrid robot, which has high modularity, fewer components, high rigidity and high bearing capacity and is easy to manufacture and convenient to calibrate.

As defined in the appended independent claim 1, the over-constrained few-joint five-degree-of-freedom hybrid robot is constituted by a two-rotating and one-translating three-degree-of-freedom parallel mechanism and a two-degree-of-freedom posture adjustment head serially connected to the two-rotating and one-translating three-degree-of-freedom parallel mechanism, and includes a fixed platform, vertical frames, a single-rotation-pair rotating frame, a double-rotation-pair rotating frame, a movable platform, a working platform, three branch chains of the same structure and the two-degree-of-freedom posture adjustment head. The working platform is disposed in front of the fixed platform. The vertical frames are symmetrically disposed on two sides of the fixed platform. The three branch chains are disposed between two vertical frames and the movable platform. The two-degree-of-freedom posture adjustment head is disposed at the lower end of the movable platform. The two-rotating and one-translating three-degree-of-freedom parallel mechanism is formed by the vertical frames, the movable platform and the three branch chains.

Each of the three branch chains of the same structure includes a servo motor, a servo motor base, a coupling, a lock nut, a lead screw, a bearing, a bearing end cap, a lead screw nut, a connecting rod sleeve, a connecting rod, guide rails, sliders and slider caps. The servo motor base with the servo motor disposed thereon is disposed at the top of one end of the connecting rod sleeve. In the connecting rod sleeve, an output end of the servo motor is connected to one end of the lead screw by the coupling. The lead screw nut mounted to one end of the connecting rod is disposed on the lead screw. An effective stroke part of the lead screw cooperates with the lead screw nut. The lead screw is supported by the bearing disposed at the bottom of the servo motor base. An inner ring of the bearing is locked by the lock nut. The bearing end cap is disposed on an inner side of the servo motor base and configured to secure an outer ring of the bearing. The other ends of the connecting rods of a first branch chain and a second branch chain are connected to the movable platform by two-degree-of-freedom Hooke joints respectively. The other end of the connecting rod of a third branch chain is connected to the movable platform by a rotation pair. Parallel guide rails are disposed on two sides of the connecting rod. The sliders are disposed on the guide rails. A group of slider caps are symmetrically disposed on two sides of the lower part of the other end of the connecting rod sleeve. The slider cap is mounted to an end cap mounting surface of the connecting rod sleeve. The sliders are mounted to inner sides of the slider caps and are capable of sliding along the guide rails that are parallelly disposed on the two sides of the connecting rod, such that the connecting rod sleeve and the connecting rod constitute a prismatic pair. A dustproof end cap is disposed at the end part of the other end of the connecting rod sleeve.

A group of corresponding motion-pair supports that are fixedly connected to the vertical frames are disposed at the tops and in the middle of the two vertical frames. The double-rotation-pair rotating frame is disposed between the group of motion-pair supports disposed at the tops of the vertical frames. The single-rotation-pair rotating frame is disposed between the group of motion-pair supports disposed in the middle of the two vertical frames. The double-rotation-pair rotating frame and the single-rotation-pair rotating frame are connected to the motion-pair supports by rotation pairs. One ends of the connecting rod sleeves of the first branch chain and the second branch chain respectively pass through through-holes in the double-rotation-pair rotating frame and are connected to the double-rotation-pair rotating frame by rotation pairs, and axes of the rotation pairs perpendicularly intersect an axis of the rotation pair between the double-rotation-pair rotating frame and the motion-pair support. One end of the connecting rod sleeve of the third branch chain passes through a through-hole in the single-rotation-pair rotating frame to be connected to the single-rotation-pair rotating frame by a rotation pair, and an axis of the rotation pair perpendicularly intersects an axis of the rotation pair between the single-rotation-pair rotating frame and the motion-pair support.

According to preferred embodiments, the axes of the two rotation pairs between the connecting rod sleeves in the first branch chain and the second branch chain and the double-rotation-pair rotating frame are parallel to each other and are also parallel to an axis of a Hooke joint close to the connecting rod and perpendicular to an axis of the prismatic pair, and axes of the two Hooke joints close to the movable platform are overlapping. An axis of a rotation pair between the lower end of the connecting rod in the third branch chain and the movable platform is parallel to an axis of the prismatic pair in the third branch chain and is perpendicular to the movable platform.

Compared with the existing technologies, the present invention has the following advantages.
1. The structure is simple and the parallel part only has 10 joints, facilitating improvement of the overall rigidity.
2. The parallel part is a 2RIT parallel mechanism having successive rotating axes, and two rotation degrees of freedom are partially decoupled, helping to reduce the difficulty in control.
3. An arrangement plane of the first branch chain coincides with that of the second branch chain and is perpendicular to that of the third branch chain, and the third branch chain is directly connected to the movable platform. Therefore, kinematic analysis is simple and calibration is facilitated.
4. The position adjustment capability of the parallel mechanism and the posture adjustment capability of the two-degree-of-freedom posture adjustment head are combined to facilitate enlarging the flexible working space of the five-degree-of-freedom hybrid robot.
5. The five-degree-of-freedom hybrid robot has high modularity and a compact structure, and is convenient for assembly, maintenance and replacement.

### BRIEF DESCRIPTION OF THE DRAWINGS

FIG. 1 is a schematic diagram of an overall structure according to the present invention;
FIG. 2 is a schematic structural diagram of a first branch chain and a second branch chain according to the present invention;
FIG. 3 is a schematic structural diagram of a third branch chain according to the present invention.

Reference numbers in the drawings are described as below: 1-working platform; 2-two-degree-of-freedom posture adjustment head; 3-movable platform; 4-first branch chain; 5-second branch chain; 6-double-rotation-pair rotating frame; 7-motion-pair support; 8-single-rotation-pair rotating frame; 9-third branch chain; 10-vertical frame; 11-fixed platform; 12-servo motor; 13-coupling; 14-servo motor base; 15-bearing end cap; 16-lock nut; 17-bearing: 18-lead screw nut; 19-lead screw; 20-slider; 21-connecting rod; 22-guide rail; 23-connecting rod sleeve; 24-dustproof end cap; 25-slider cap; 26-Hooke joint.

### DETAILED DESCRIPTION

FIG. I is a schematic diagram of an over-constrained few-joint five-degree-of-freedom hybrid robot. In this schematic diagram, a working platform 1 is disposed in front of a fixed platform 11; vertical frames 10 are symmetrically disposed on two sides of the fixed platform; three branch chains are disposed between the two vertical frames and a movable platform 3; a two-degree-of-freedom posture adjustment head 2 is disposed at the lower end of the movable platform; and a two-rotating and one-translating three-degree-of-freedom parallel mechanism is formed by the vertical frames, the movable platform and the three branch chains.

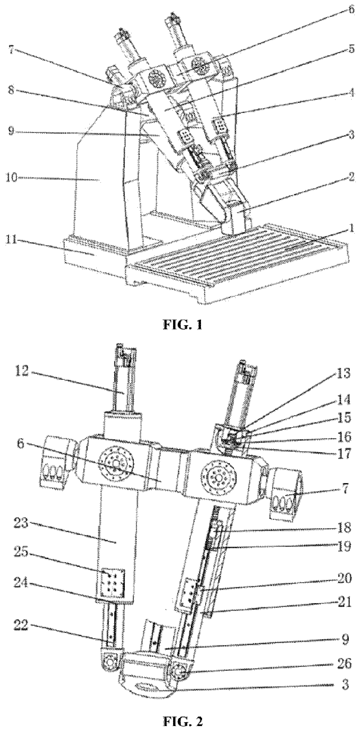

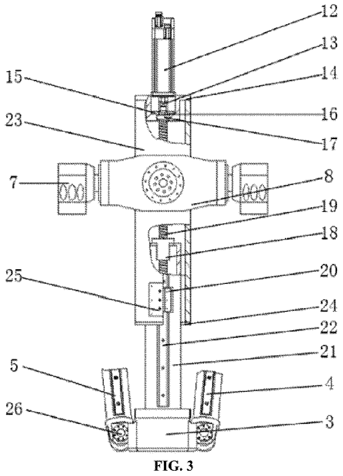

As shown in FIG. 2 and FIG. 3, a servo motor base 14 with a servo motor 12 disposed thereon is disposed at the top of one end of the connecting rod sleeve 23; in the connecting rod sleeve, an output end of the servo motor is connected to one end of a lead screw 19 by a coupling 13; a lead screw nut 18 mounted to one end of a connecting rod 21 is disposed on the lead screw; an effective stroke part of the lead screw cooperates with the lead screw nut; the lead screw is supported by a bearing 17 disposed at the bottom of the servo motor base; an inner ring of the bearing is locked by a lock nut 16; a bearing end cap 15 is disposed on an inner side of the servo motor base and configured to secure an outer ring of the bearing; the other ends of the connecting rods of a first branch chain 4 and a second branch chain 5 are connected to the movable platform by two-degree-of-freedom Hooke joints 26 respectively; the other end of the connecting rod of a third branch chain 9 is connected to the movable platform by a rotation pair; parallel guide rails 22 are disposed on two sides of the connecting rod; sliders 20 are disposed on the guide rails; a group of slider caps 25 are symmetrically disposed on two sides of the other end of the connecting rod sleeve; the slider cap is mounted to an end cap mounting surface of the connecting rod sleeve; the sliders are mounted to inner sides of the slider caps and are capable of sliding along the guide rails that are parallelly disposed on the two sides of the connecting rod, such that the connecting rod sleeve and the connecting rod constitute a prismatic pair; and a dustproof end cap 24 is disposed at the end part of the other end of the connecting rod sleeve.

A group of corresponding motion-pair supports 7 that are fixedly connected to the vertical frames are disposed at the tops and in the middle of the two vertical frames. A double-rotation-pair rotating frame 6 is disposed between the group of motion-pair supports disposed at the tops of the vertical frames. A single-rotation-pair rotating frame 8 is disposed between the group of motion-pair supports disposed in the middle of the two vertical frames. The double-rotation-pair rotating frame and the single-rotation-pair rotating frame are connected to the motion-pair supports by rotation pairs. One ends of the connecting rod sleeves of the first branch chain and the second branch chain respectively pass through through-holes in the double-rotation-pair rotating frame and are connected to the double-rotation-pair rotating frame by rotation pairs, and axes of the rotation pairs perpendicularly intersect an axis of the rotation pair between the double-rotation-pair rotating frame and the motion-pair support. One end of the connecting rod sleeve of the third branch chain passes through a through-hole in the single-rotation-pair rotating frame to be connected to the single-rotation-pair rotating frame by a rotation pair, and the axis of the rotation pair perpendicularly intersects an axis of the rotation pair between the single-rotation-pair rotating frame and the motion-pair support.

The axes of the two rotation pairs between the connecting rod sleeves in the first branch chain and the second branch chain and the double-rotation-pair rotating frame are parallel to each other, and are also parallel to an axis of a Hooke joint close to the connecting rod and perpendicular to an axis of the prismatic pair. Axes of the two Hooke joints close to the movable platform are overlapping. An axis of a rotation pair between the lower end of the connecting rod in the third branch chain and the movable platform is parallel to an axis of the prismatic pair in the third branch chain and is perpendicular to the movable platform.

The above described is only preferred embodiments of the present invention, and is not intended to limit the present invention in any form. Any person of ordinary skill in the art can successfully implement the present invention as shown in the accompanying drawings and described above. However, all equivalent changes, modifications, and evolutions made by those skilled in the art using the technical content disclosed above without departing from the scope of the appended claims also embodiments of the present invention.

## Claims

1. An over-constrained few-joint five-degree-of-freedom hybrid robot, comprising: a fixed platform (11), vertical frames (10), a single-rotation-pair rotating frame (8), a double-rotation-pair rotating frame (6), a movable platform (3), a working platform (1), three branch chains (4, 5, 9) of the same structure and a two-degree-of-freedom posture adjustment head (2), wherein the working platform (1) is disposed in front of the fixed platform (11); the vertical frames (10) are symmetrically disposed on two sides of the fixed platform (11); the three branch chains (4, 5, 9) are disposed between the two vertical frames (10) and the movable platform (3); the two-degree-of-freedom posture adjustment head (2) is disposed at the lower end of the movable platform (3); a two-rotating and one-translating three-degree-of-freedom parallel mechanism is formed by the vertical frames (10), the movable platform (3) and the three branch chains (4, 5, 9); wherein each of the three branch chains (4, 5, 9) of the same structure comprises a servo motor (12), a servo motor base (14), a coupling (13), a lock nut (16), a lead screw 19), a bearing (17), a bearing end cap (15), a lead screw nut (18), a connecting rod sleeve (23), a connecting rod (21), guide rails (22), sliders (20) and slider caps (25), wherein the servo motor base (14) with the servo motor (12) disposed thereon is disposed at the top of one end of the connecting rod sleeve (23); in the connecting rod sleeve (23), an output end of the servo motor is connected to one end of the lead screw (19) by the coupling (13); the lead screw nut (18) mounted to one end of the connecting rod (21) is disposed on the lead screw (19); an effective stroke part of the lead screw (19) cooperates with the lead screw nut (18); the lead screw (19) is supported by the bearing (17) disposed at the bottom of the servo motor base (14); an inner ring of the bearing (17) is locked by the lock nut (16); the bearing end cap (15) is disposed on an inner side of the servo motor base (14) and configured to secure an outer ring of the bearing (17); the other ends of the connecting rods (21) of a first branch chain (4) and a second branch chain (5) are connected to the movable platform (3) by two-degree-of-freedom Hooke joints (26) respectively; the other end of the connecting rod (21) of a third branch chain (9) is connected to the movable platform (3) by a rotation pair; parallel guide rails (22) are disposed on two sides of the connecting rod (21); the sliders (20) are disposed on the guide rails (22); a group of slider caps (25) are symmetrically disposed on two sides of the lower part of the other end of the connecting rod sleeve (23); the slider cap (25) is mounted to an end cap mounting surface of the connecting rod sleeve (23); the sliders (20) are mounted to inner sides of the slider caps (25) and are capable of sliding along the parallel guide rails (22) on the two sides of the connecting rod (21), such that the connecting rod sleeve (23) and the connecting rod (21) constitute a prismatic pair; a dustproof end cap (24) is disposed at the end part of the other end of the connecting rod sleeve (23); wherein a group of corresponding motion-pair supports (7) that are fixedly connected to the vertical frames (10) are disposed at the tops and in the middle of the two vertical frames (10); the double-rotation-pair rotating frame (6) is disposed between the group of motion-pair supports (7) disposed at the tops of the vertical frames (10); the single-rotation-pair rotating frame (8) is disposed between the group of motion-pair supports (7) disposed in the middle of the two vertical frames (10); the double-rotation-pair rotating frame (6) and the single-rotation-pair rotating frame (8) are connected to the motion-pair supports (7) by rotation pairs; the one ends of the connecting rod sleeves (23) of the first branch chain (4) and the second branch chain (5) respectively pass through through-holes in the double-rotation-pair rotating frame (6) and are connected to the double-rotation-pair rotating frame (6) by rotation pairs, and axes of the rotation pairs perpendicularly intersect an axis of the rotation pair between the double-rotation-pair rotating frame (6) and the motion-pair support (7); and one end of the connecting rod sleeve (23) of the third branch chair (9) passes through a through-hole in the single-rotation-pair rotating frame (8) to be connected to the single-rotation-pair rotating frame (8) by a rotation pair, and the axis of the rotation pair perpendicularly intersects an axis of the rotation pair between the single-rotation-pair rotating frame (8) and the motion-pair support (7).

2. The over-constrained few-joint five-degree-of-freedom hybrid robot according to claim 1, wherein axes of the two rotation pairs between the connecting rod sleeves (23) in the first branch chain (4) and the second branch chain (5) and the double-rotation-pair rotating frame (6) are parallel to each other and are also parallel to an axis of a Hooke joint close to the connecting rod (21) and perpendicular to an axis of the prismatic pair, and axes of the two Hooke joints (26) close to the movable platform (3) are overlapping.

3. The over-constrained few-joint five-degree-of-freedom hybrid robot according to claim 1, wherein an axis of the rotation pair between the lower end of the connecting rod (21) in the third branch chain (9) and the movable platform (3) is parallel to an axis of the prismatic pair in the third branch chain (9) and is perpendicular to the movable platform (3).

## Patentansprüche

1. Überbestimmter Hybridroboter mit wenigen Gelenken und fünf Freiheitsgraden, umfassend: eine feste Plattform (11), vertikale Rahmen (10), einen Drehrahmen mit einem einzigen Rotationspaar (8), einen Drehrahmen mit doppeltem Rotationspaar (6), eine bewegliche Plattform (3), eine Arbeitsplattform (1), drei Greifarm-Ketten (4, 5, 9) gleicher Struktur und einen Positionseinstellkopf mit zwei Freiheitsgraden (2),
wobei die Arbeitsplattform (1) vor der festen Plattform (11) angeordnet ist; die vertikalen Rahmen (10) symmetrisch auf zwei Seiten der festen Plattform (11) angeordnet sind; die drei Greifarm-Ketten (4, 5, 9) zwischen den zwei vertikalen Rahmen (10) und der beweglichen Plattform (3) angeordnet sind; der Positionseinstellkopf (2) mit zwei Freiheitsgraden am unteren Ende der beweglichen Plattform (3) angeordnet ist; die vertikalen Rahmen (10), die bewegliche Plattform (3) und die drei Greifarm-Ketten (4, 5, 9) einen parallelen Mechanismus mit zwei Drehmechanismen und einem Translationsmechanismus mit drei Freiheitsgraden bilden;
wobei jede der drei Greifarm-Ketten (4, 5, 9) gleicher Struktur einen Servomotor (12), eine Servomotorbasis (14), eine Kupplung (13), eine Feststellmutter (16), eine Leitspindel (19), ein Lager (17), eine Lagerschutzkappe (15), eine Leitspindelmutter (18), eine Pleuelstangenhülse (23), eine Pleuelstange (21), Führungsschienen (22), Schieber (20) und Schieberkappen (25) umfasst,
wobei die Servomotorbasis (14) mit dem darauf angeordneten Servomotor (12) an der Oberseite eines Endes der Pleuelstangenhülse (23) angeordnet ist; das Ausgangsende des Servomotors mit einem Ende der Leitspindel (19) durch die Kupplung (13) in der Pleuelstangenhülse (23) verbunden ist; die Leitspindelmutter (18), die an einem Ende der Pleuelstange (21) angebracht ist, auf der Leitspindel (19) angeordnet ist; der effektive Hubteil der Leitspindel (19) mit der Leitspindelmutter (18) zusammen wirkt; die Leitspindel (19) durch das Lager (17) unterstützt wird, das an der Unterseite der Servomotorbasis (14) angeordnet ist; der innere Ring des Lagers (17) durch die Feststellmutter (16) verriegelt ist; die Lagerschutzkappe (15) auf der Innenseite der Servomotorbasis (14) angeordnet und konfiguriert ist, um den Außenring des Lagers (17) zu sichern; die anderen Enden der Pleuelstangen (21) der ersten Greifarm-Kette (4) und der zweiten Greifarm-Kette (5) jeweils mit der beweglichen Plattform (3) durch Kreuzgelenke (26) mit zwei Freiheitsgraden verbunden sind; das andere Ende der Pleuelstange (21) der dritten Greifarm-Kette (9) mit der beweglichen Plattform (3) durch ein Rotationspaar verbunden ist; parallele Führungsschienen (22) auf zwei Seiten der Pleuelstange (21) angeordnet sind; die Schieber (20) auf den Führungsschienen (22) angeordnet sind; eine Gruppe von Schieberkappen (25) symmetrisch auf zwei Seiten des unteren Teils des anderen Endes der Pleuelstangenhülse (23) angeordnet sind; die Schieberkappe (25) am Ende der Kappenbefestigungsfläche der Pleuelstangenhülse (23) montiert ist; die Schieber (20) an Innenseiten der Schieberkappen (25) angebracht sind und entlang der parallelen Führungsschienen (22) auf den beiden Seiten der Pleuelstange (21) gleiten können, so dass die Pleuelstangenhülse (23) und die Pleuelstange (21) ein prismatisches Paar bilden; eine staubdichte Endkappe (24) am Endteil des anderen Endes der Pleuelstangenhülse (23) angeordnet ist;
wobei an den oberen Enden und in der Mitte der beiden Vertikalrahmen (10) eine Gruppe von entsprechenden Bewegungspaarträgern (7) angeordnet ist, die fest mit den Vertikalrahmen (10) verbunden sind; der Drehrahmen mit doppeltem Rotationspaar (6) zwischen der Gruppe von Bewegungspaarträgern (7) angeordnet ist, die an den oberen Enden der vertikalen Rahmen (10) angeordnet sind; der Drehrahmen mit dem einzigen Rotationspaar (8) zwischen der Gruppe von Bewegungspaarträgern (7) angeordnet ist, die in der Mitte der zwei vertikalen Rahmen (10) angeordnet sind; der Drehrahmen mit doppeltem Rotationspaar (6) und der Drehrahmen mit dem einzigen Rotationspaar (8) mit den Bewegungspaarträgern (7) durch die Rotationspaare verbunden sind: die Enden der Pleuelstangenhülsen (23) der ersten Greifarm-Kette (4) und der zweiten Greifarm-Kette (5) jeweils durch Durchgangslöcher im Drehrahmen mit doppeltem Rotationspaar (6) verlaufen und mit dem Drehrahmen mit doppeltem Rotationspaar (6) durch die Rotationspaare verbunden sind, und die Achsen der Rotationspaare die Achse des Rotationspaars zwischen dem Drehrahmen mit doppeltem Rotationspaar (6) und den Bewegungspaarträgern (7) senkrecht überschneiden; und ein Ende der Pleuelstangenhülse (23) der dritten Greifarm-Kette (9) durch das Durchgangsloch im Drehrahmen mit dem einzigen Rotationspaar (8) verläuft, um mit dem Drehrahmen mit dem einzigen Rotationspaar (8) durch das Rotationspaar verbunden zu werden, und die Achse des Rotationspaars die Achse des Rotationspaars zwischen dem Drehrahmen mit dem einzigen Rotationspaar (8) und den Bewegungspaarträgern (7) senkrecht überschneidet.

2. Überbestimmter Hybridroboter mit wenigen Gelenken und fünf Freiheitsgraden nach Anspruch 1, wobei die Achsen der zwei Rotationspaare zwischen den Pleuelstangenhülsen (23) in der ersten Greifarm-Kette (4) und der zweiten Greifarm-Kette (5) und dem Drehrahmen mit doppeltem Rotationspaar (6) parallel zueinander und auch parallel zu der Achse des Kreuzgelenks nahe der Pleuelstange (21) und senkrecht zu der Achse des prismatischen Paars und Achsen der beiden Kreuzgelenke (26) nahe der beweglichen Plattform (3) sich überlappen.

3. Überbestimmter Hybridroboter mit wenigen Gelenken und fünf Freiheitsgraden nach Anspruch 1, wobei die Achse des Rotationspaars zwischen dem unteren Ende der Pleuelstange (21) in der dritten Greifarm-Kette (9) und der beweglichen Plattform (3) parallel zu der Achse des prismatischen Paares in der dritten Greifarm-Kette (9) ist und senkrecht zu der beweglichen Plattform (3) ist.

## Revendications

1. Un robot hybride à cinq degrés de liberté et à quelques articulations surcontraintes, comprenant :
une plate-forme fixe (11), des cadres verticaux (10), un châssis tournant à paire de rotation unique (8), un châssis tournant à paire de rotation double (6), une plate-forme mobile (3), une plate-forme de travail (1), trois chaînes à branches (4, 5, 9) de même structure et d'une tête de réglage de posture à deux degrés de liberté (2),
dans laquelle la plate-forme de travail (1) est disposée devant la plate-forme fixe (11) ;
les cadres verticaux (10), sont disposés symétriquement de part et d'autre de une plate-forme fixe (11) ; trois chaînes à branches (4, 5, 9) sont disposées entre les deux châssis verticaux (10) et la plate-forme mobile (3) ;
la tête de réglage de posture à deux degrés de liberté (2) est disposée à l'extrémité inférieure de la plate-forme mobile (3) ;
un mécanisme parallèle à trois degrés de liberté à deux rotations et une translation est formé par les châssis verticaux (10), la plate-forme mobile (3) et les trois chaînes à branches (4, 5, 9) ;
dans laquelle chacune des trois chaînes à branches (4, 5, 9) d'une même structure comprend un servomoteur (12), une embase servomoteur (14), un accouplement (13), un contre-écrou (16), une vis mère (19), un palier (17), un embout de palier (15), un écrou de vis mère (18), un manchon de bielle (23), une bielle (21), des rails de guidage (22), des patins (20) et des capuchons de curseur (25),
dans laquelle la base de servomoteur (14) avec le servomoteur (12) disposé dessus est disposé au sommet d'une extrémité du manchon de bielle (23) ;
dans le manchon de bielle (23), une extrémité de sortie du servomoteur est connectée à une extrémité de la vis mère (19) par l'accouplement (13) ;
l'écrou de la vis mère (18) monté à une extrémité de la bielle (21) est disposée sur la vis mère (19) ;
une course efficace faisant partie de la vis mère (19) coopère avec l'écrou de la vis mère (18) ;
la vis mère (19) est soutenue par le palier (17) disposé au bas de la base du servomoteur (14) ;
une bague intérieure du palier (17) est bloqué par le contre-écrou (16) ;
l'embout de palier (15) est disposé sur un côté intérieur de la base du servomoteur (14) et configuré pour fixer une bague extérieure du palier (17) ;
les autres extrémités des bielles (21) d'une première chaîne à branches (4) et une deuxième chaîne à branches (5) sont reliées à la plate-forme mobile (3) par des joints de Hooke à deux degrés de liberté (26) respectivement ;
l'autre extrémité de la bielle (21) d'une troisième chaîne à branches (9) est reliée à la plate-forme mobile (3) par une paire de rotation ;
des rails de guidage parallèles (22) sont disposés de part et d'autre de la bielle (21) ;
les curseurs (20) sont disposés sur les rails de guidage (22) ;
un groupe de capuchons de curseur (25) sont disposés symétriquement de part et d'autre de la partie inférieure du manchon de bielle (23);
le capuchon de curseur (25) est monté sur une surface de montage de capuchon d'extrémité du manchon de bielle (23) ;
les curseurs (20) sont montés sur les côtés intérieurs des capuchons de curseur (25) et sont capables de coulisser le long des rails de guidage parallèles (22) sur les deux côtés de la bielle (21), de sorte que le manchon de bielle (23) et la bielle (21) constitue une paire prismatique ;
un capuchon d'extrémité étanche à la poussière (24) est disposé à la partie terminale de l'autre extrémité du manchon de bielle (23) ;
dans laquelle un groupe de supports de paires de mouvement correspondants (7) qui sont reliés de manière fixe aux
châssis verticaux (10) sont disposés au sommet et au milieu des deux châssis verticaux (10) ;
le châssis tournant à paire de rotations double (6) est disposé entre le groupe des supports de paire de mouvement (7) disposés au sommet des châssis verticaux (10) ;
le châssis tournant à paire de rotation unique (8) est disposé entre le groupe de supports de paires de mouvement (7) disposé au milieu des deux châssis verticaux (10) ;
le châssis rotatif à paire de rotations double (6) et le châssis rotatif à paire de rotations unique (8) sont reliés aux supports de paires de mouvement (7) par des paires de rotation ;
l'une des extrémités des manchons de bielle (23) de la première chaîne à branches (4) et la deuxième chaîne à branches (5) traversent respectivement des trous traversants dans le châssis rotatif à rotation double (6) et sont reliés au châssis rotatif à rotation double (6) par des paires de rotation, et les axes des paires de rotation coupent perpendiculairement un axe de la paire de rotation entre le châssis rotatif à paire de rotations double (6) et le support de paire de mouvement (7) ;
et une extrémité du manchon de bielle (23) de la troisième chaine à branches (9) passe à travers un trou traversant dans le châssis rotatif à paire de rotation unique (8) pour être reliée au châssis tournant à paire de rotation unique (8) par une paire de rotations, et l'axe de la paire de rotations coupe perpendiculairement un axe de la paire de rotations entre le châssis tournant à paire de rotation unique (8) et le support de paire de mouvement (7).

2. Le robot hybride à cinq degrés de liberté et à quelques articulations surcontraintes selon la revendication 1, dans laquelle les axes des deux paires de rotation entre les manchons de bielle (23) dans la première chaîne à branches (4) et la deuxième chaîne à branches (5) et le châssis tournant à paire de rotation unique (6) sont parallèles les uns aux autres et sont également parallèles à un axe d'une articulation Hooke proche de la bielle (21) et perpendiculaires à un axe de la paire prismatique, et les axes des deux joints de Hooke (26) proches de la plate-forme mobile (3) se chevauchent.

3. Le robot hybride à cinq degrés de liberté et à quelques articulations surcontraintes selon la revendication 1, dans laquelle un axe de la paire de rotation entre l'extrémité inférieure de la bielle (21) dans la troisième chaîne à branches (9) et la plate-forme mobile (3) est parallèle à un axe de la paire prismatique dans la troisième chaîne à branches (9) et est perpendiculaire à la plate-forme mobile (3).
